Europäisches Patentamt

European Patent Office

Office européen des brevets

(19)

(11) **EP 1 385 329 A2**

(12) **EUROPEAN PATENT APPLICATION**

(43) Date of publication:
**28.01.2004 Bulletin 2004/05**

(51) Int Cl.⁷: **H04N 1/40**, H04N 1/56

(21) Application number: **03250196.7**

(22) Date of filing: **13.01.2003**

(84) Designated Contracting States:
**AT BE BG CH CY CZ DE DK EE ES FI FR GB GR
HU IE IT LI LU MC NL PT SE SI SK TR**
Designated Extension States:
**AL LT LV MK RO**

(30) Priority: **27.07.2002 KR 2002044489**

(71) Applicant: **SAMSUNG ELECTRONICS CO., LTD.**
**Suwon-City, Kyungki-do (KR)**

(72) Inventor: **Lim, Sung-hyun**
**Dongjak-gu, Seoul (KR)**

(74) Representative: **Geary, Stuart Lloyd et al**
**Venner, Shipley & Co.,**
**20 Little Britain**
**London EC1A 7DH (GB)**

(54) **Document content classification**

(57) A digital image quality enhancement method is provided. In image data composed of pixels with a predetermined resolution, the image data obtained by scanning a script including mixed background, text, and image, a pixel of interest is classified into one of a text area, a background area, and an image area, and the image quality of the pixel of interest is improved to different degrees according to which area the pixel of interest belongs to. Then, a pixel adjacent to the pixel of interest is set to be a new pixel of interest, and the new pixel of interest undergoes the same image quality enhancement as describe above. The method includes a color data conversion step, a pixel segmentation step, a history information storage step, an area segmentation step, an image quality enhancement step, and a step for determining whether the pixel of interest is the final pixel.

In one embodiment pixels are provisionally classified according to their own values and subsequently classified according to the number of similarly provisionally classified pixels that continue in a particular direction before the pixel of interest.

FIG. 8

**Description**

The present invention relates to method of categorising areas of a mixed-content physical document, the method comprising obtaining a colour pixelated electronic representation of the appearance of a physical document, and classifying each pixel according its value and the values of neighbouring pixels as being associated with one of a plurality of content types. The present invention also relates to an apparatus for categorising areas of a mixed-content physical document, the apparatus comprising means for obtaining a colour pixelated electronic representation of the appearance of a physical document, and means for classifying each pixel according its value and the values of neighbouring pixels as being associated with one of a plurality of content types.

Figure 1 is a block diagram of an image processing system disclosed in the US-A-4996603, which is a conventional image processing system for processing a document containing a mixture of text and graphics by separating the text from any images.

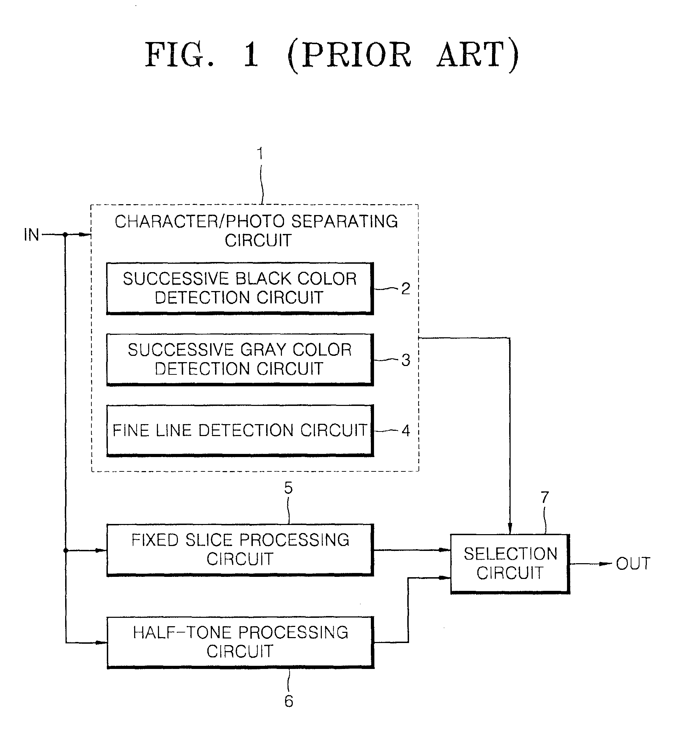

Referring to Figure 1, the conventional image processing system includes a character/photo separation circuit 1, a fixed slice processing circuit 5 for slicing pixels determined to be in a text area by a predetermined fixed threshold level, and a half-tone processing circuit 6 for half-tone processing pixels determined to be in images. The character/photo separation circuit 1 includes a successive black colour detection circuit 2, a successive gray color detection circuit 3 and a fine line detection circuit, and separates text from images based on the number of successive pixels with a brightness value greater than a threshold. The character/photo separation circuit uses two thresholds. The first threshold Th0 is close to white, and the second threshold Th1 is close to black. The first threshold Th0 is used by the successive gray color detection circuit 3. Text is separated from images according to whether a predetermined minimum number of pixels with a brightness equal to or less than the first threshold Th0 appear in succession. The second threshold Th1 is used in the successive black colour detection circuit 2. If a predetermined minimum number of dark pixels with a brightness equal to or less than the second threshold Th1 appear in succession, they are classified as belonging to thick black lines. The character pixels and thick black line pixels undergo fixed slicing so that the brightness values of successive pixels, regardless of the characteristics of adjacent pixels, are set to white or black and not any intervening values. Meanwhile, an image area undergoes halftone processing.

Halftone processing is used for printing a black and white picture in newspapers, magazines and the like. An output apparatus for obtaining a binary output, that is, an output expressed using only two levels, i.e. black and white, expresses gray scale images by means of halftone processing.

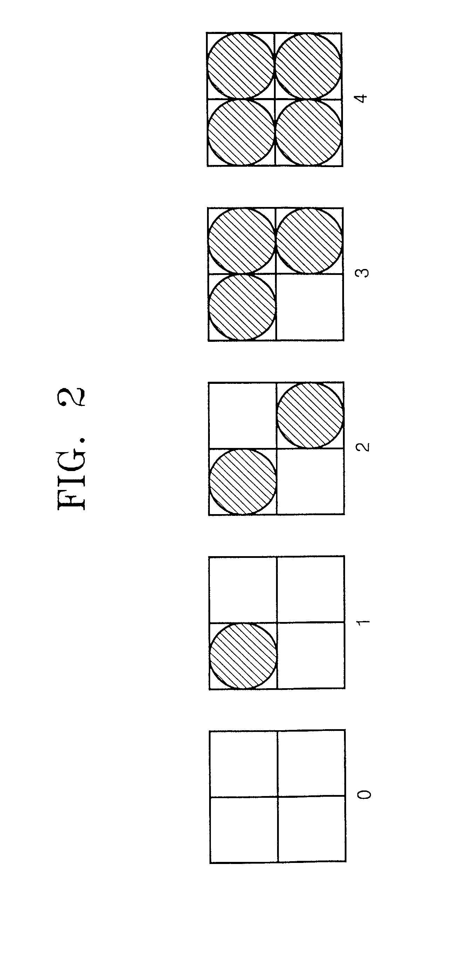

Figure 2 shows a 2x2 area with dot configurations for obtaining five gray scale levels between black and white in order to illustrate an example of half-tone processing. For example, a binary output apparatus requires 2x2 pixel blocks in order to create five levels in the range from white to black. That is, an nxn block of binary pixels can express $n^2+1$ levels.

Although the half-tone technique actually degrades the resolution by blocking a document into nxn areas, it is suitable as a rough image processing technique for use in a binary outputting apparatus which is incapable of producing a high-quality gray scale output. However, gray scale images output by half-tone processing are not authentic successive gray scale images. These half-tone processed images may look to a human eye as low-frequency gray scale images expressed well in gray scale, but are actually high-frequency screened images. It can be seen that, if the nxn blocks in Figure 2 are gathered together, they form a screened image. If the half-tone processed images are scanned by a charged coupled device (CCD), for example, a 600dpi-resolution CCD or a contact image sensor (CIS), one pixel is discretized into fine pixels of about 42.3 $\mu$m each. Accordingly, an area that must be recognized as a photo area is wrongly detected as a text or a fine line.

The screened halftone image is a distortion appearing in data obtained by halftoning a photo area and scanning the half-tone image.

When such a screened half-tone pattern appears, a bright pixel, that is, a pixel with brightness equal to or greater than the first threshold Th0, intermittently appears, such that an area that should be recognised as being in a photograph is highly likely to be wrongly recognized being in a character area. Accordingly, if a document containing half-tone images is scanned, a half-tone photograph is wrongly determined to be a text area. If the wrongly identified character area is emphasized, a greatly distorted output is obtained.

A method according to the present invention is characterised in that said content types are background, text and image, and said classifying of each pixel comprises an initial classification step in which pixels are provisionally classified according to their own values and a subsequent classification step in which the provisional classification is confirmed or modified in dependence on history data as a subsequent classification, the history data comprising a run length of similarly provisionally classified pixels in at least one direction from the current pixel.

An apparatus according to the present invention is characterised in that said content types are background, text and image, and said means for classifying each pixel is configured for classifying each pixel by an initial classification step in which pixels are provisionally classified according to their own values and a subsequent classification step in which the provisional classification is confirmed or modified in dependence on history data as a subsequent classification, the history data comprising a run length of similarly provisionally classified pixels in at least one direction from the current pixel.

The run lengths preferably include the current pixel.

Preferably, for each provisional background pixel, the history information comprises the run length of provisional background pixels upwards from the current pixel.

Preferably, for each provisional image pixel, the history information comprises the run length of provisional image pixels upwards from the current pixel.

Preferably, for each provisional non-background pixel, the history information comprises the run length of provisional non-background pixels leftwards from the current pixel.

Preferably, a change to a provisional classification of the current pixel is propagated to the pixels contributing to an associated run length.

Preferably, if the current pixel has been subsequently classified as a text pixel and the pixel directly above the current pixel has been subsequently classified as an image pixel, the classification of the current pixel is changed to image pixel.

Preferably, if the current pixel has been subsequently classified as an image pixel, propagating the image classification to the right until a subsequently background classified pixel is encountered.

Preferably, if the pixel in the current line preceding the current pixel has been subsequently classified as a background and the current pixel has been subsequently classified as a background pixel else classifying the current pixel as a text pixel.

Preferably, a method according to the present invention includes applying different image enhancement techniques to areas determined to contain background, text and image pixels.

Preferably, text areas are enhanced by classifying the pixels in a text area of interest into three brightness bands, pixels in the brightest band being set to white, pixels in the darkest band being set to black and pixels in the middle band being subject to a sharpening filter.

Preferably, images areas are subjected to a sharpening filter.

Preferably, said electronic representation is obtained in RGB format and converted to YCbCr format for pixel classification.

An embodiment of the present invention will now be described, by way of example, with reference to Figures 3 to 9 of the accompanying drawings, in which:

Figure 1 is a block diagram of a conventional image processing system for distingushing between text and images regions in an image of a document;
Figure 2 shows a 2x2 block with dot configurations for obtaining five gray scale levels;
Figure 3 is a flowchart illustrating a digital image quality enhancement method according to the present invention;
Figure 4 shows a 3x3 mask, which is an embodiment of a low pass filter capable of performing the smoothing step of Figure 3;
Figure 5 is a graph for explaining the pixel classification step of Figure 3;
Figure 6 explains the condition for detecting a background feature in the area classification step of Figure 3;
Figure 7 explains the condition for detecting an image feature in the area segmentation step of Figure 3;
Figure 8 is a flowchart illustrating the area segmentation step of Figure 3; and
Figure 9 is a block diagram of a digital image quality enhancement apparatus according to the present invention.

In an image quality enhancement method according to the present invention, data representing the appearance of a document is obtained, for example by scanning the original using a scanner with a predetermined resolution.

Typically a scanner includes a light source, a lens and an image sensor. The light source projects light onto the document being scanner. The lens focuses the light reflected from the document onto the image sensor. The image sensor, which is usually implemented with a charge coupled device (CCD) or a contact image sensor (CIS), comprises a plurality of electronic cells spaced at predetermined intervals and discretizes the received light into digital image data with a predetermined resolution set by the packing density of the cells. The minimum unit of discretized data is data corresponding to one cell in the image sensor and is referred to as a pixel.

In the following, the term "pixel of interest" indicates a pixel on which an image quality enhancement method is performed. The term "line of interest" denotes a row to which the pixel of interest belongs. Upper side, lower side, right side and left side pixels are determined with reference to the pixel of interest. The term "left side pixel" denotes a pixel that exists on the line of interest and is processed before the pixel of interest. The term "right side pixel" denotes a pixel that exists on the line of interest and is processed after the pixel of interest. The term "upper side pixel" denotes a pixel that exists in the line processed immediately before the line of interest and is adjacent to the pixel of interest. The term "lower side pixel" denotes a pixel that exists in the line processed immediately after the line of interest and is adjacent to the pixel of interest.

The present invention relates to an image quality enhancement method, in which a pixel of interest is assigned to text, background and photo areas. The image quality of the pixel of interest is improved to a degree corresponding to the assigned area, the pixel next to the pixel of interest on which an image quality enhancement process has been performed is set as a new pixel of interest, and the new pixel of interest also undergoes the above-described image quality enhancement process.

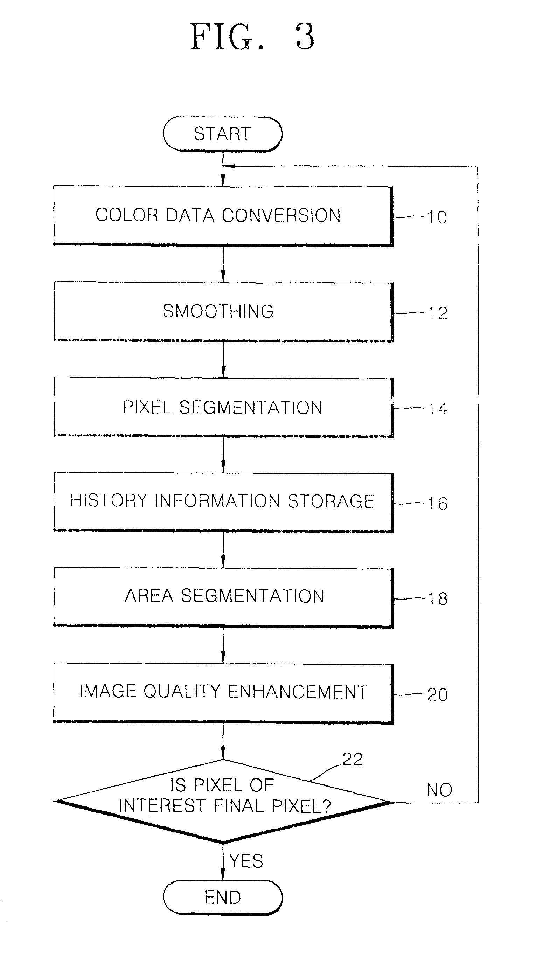

Referring to Figure 3, a digital image quality enhancement method, according to the present invention, includes a color data conversion step 10, a smoothing step 12, a pixel classification step 14, a history information storage step 16, an area segmentation step 18, an image quality enhancement step 20, and a step 22 of determining whether a pixel of interest is a final one.

To be more specific, in step 10, RGB colour data for a pixel of interest is converted into colour data that has a brightness component and a saturation component.

Models expressing colours are expressed in a three-dimensional coordinate system, and are used in connection with colour monitors, colour printers, animation and TV images. The colour models include the red/green/blue (RGB) model for colour monitors and colour video cameras, a YIQ model used for colour TV broadcasting and a YCbCr model.

The RGB colour model corresponds to the manners in which the image sensors of cameras and scanners and light emitting displays operate. In order to process a colour image with a 256 gray scale, 8 bits are allocated for each of R, G, and B channels per pixel and, consequently, one pixel requires 24 bits, i.e. 3 bytes.

The YIQ colour model is adopted to achieve compatibility with equipment for colour TV broadcasting. The YIQ colour model divides RGB colour data into a brightness component and a saturation component. Å Y component representing brightness provides all kinds of video information required by black and white TVs. I and Q components representing saturation indicate in phase and quadrature components respectively. The conversion of colour data from the RGB colour model to the YIQ colour model is made by Equation 1:

$$Y = 0.29900R + 0.58700G + 0.11400B$$
$$I = 0.59600R \ 0.27500G \ 0.32100B \qquad ...(1)$$
$$Q = 0.21200R \ 0.52300G + 0.31100B$$

The YCbCr colour model has been proposed by the International Telecommunication Union-Radio communication sector (ITU-R) BT.601 in order to establish digital video component standard. YCbCr is another colour space that separates the brightness from colour information. The brightness is symbolized by Y, and blue information and red information are symbolized as Cb and Cr, respectively. Among many methods of converting the YCbCr colour model into the RGB colour model and vice versa, the ITU-R recommends a typical colour data conversion method used for image compression, such as JPEG or MPEG, the conversion method being expressed by Equation 2:

$$Y = 0.29900R + 0.58700G + 0.11400B$$

$$Cb = 0.16874R \ 0.33126G + 0.50000B$$

$$Cr = 0.50000R \ 0.41869G \ 0.08131B$$

$$R = 1.00000Y + 1.40200Cr$$

$$G = 1.00000Y \ 0.34414Cb \ 0.71414Cr$$

$$B = 1.00000Y + 1.77200Cb \qquad (2)$$

In a preferred embodiment of step 10, if colour data is converted using the YCbCr colour model, the Y component is the brightness and the saturation component is obtained from the Cb and Cr components. For example, the saturation component can be obtained from the sum of the absolute value of Cb and the absolute value of Cr. Alternatively, the saturation component can be obtained from the root mean square (RMS) of Cb and Cr. The two cases are expressed as in Equations 3 and 4, respectively:

$$\text{Saturation} = |Cb| + |Cr| \tag{3}$$

$$\text{Saturation} = \sqrt{Cb^2 + Cr^2} \tag{4}$$

In an image quality enhancement method according to the present invention, the data smoothing step 12 can be selectively performed after the colour data conversion step 10, so that step 14 can provide a more precise pixel classification. In step 12, smoothing is performed to reduce the high frequency component in a brightness component.

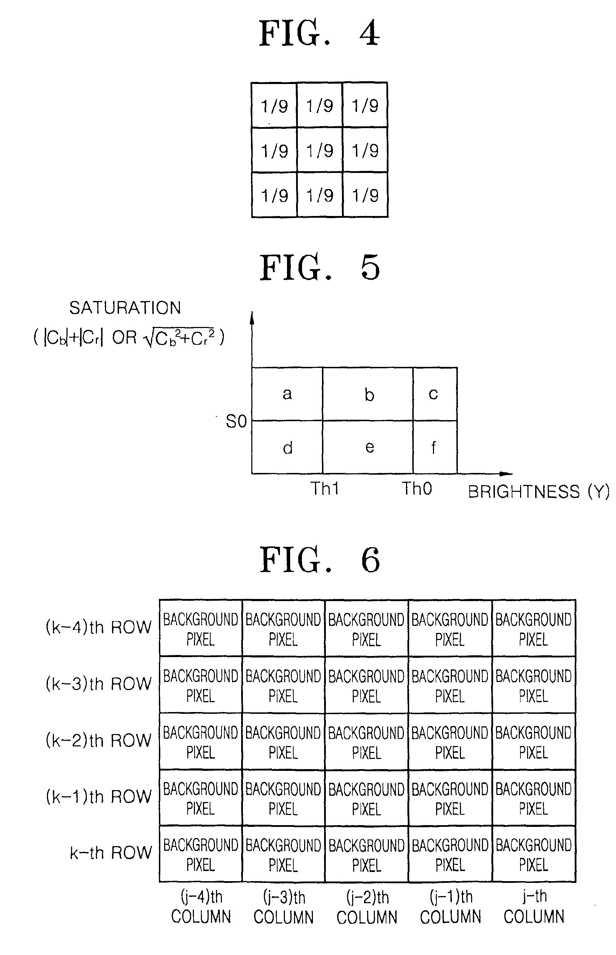

Referring also to Figure 4, in an embodiment of step 12, a low pass filter of a predetermined pixel block size, for example 3x3, performs smoothing. The filter denotes a spatial filter and is also referred to as a mask. In the case of a screened half-tone area, obtained when the original half-tone image is scanned, an error occurs when a photo area in the screened half-tone area is segmented. A wrongly-segmented photo area may produce an output with an enhanced noise component. The low pass filter converts the screened half-tone area into an area substantially with a continuum of tones, so that errors generated when an image area is segmented in the area segmentation step 18 can be reduced. As can be seen from Figure 4, when a pixel at the centre of the mask is the pixel of interest, the brightness values of pixels existing in the mask are added to the mask, and accordingly, the output of the low pass filter is simply the mean of all of the pixels existing within the mask. Smoothing by the low pass filter is an image processing technique used in preprocessing, such as the removal of a small, fine portions from an image before extraction of large objects from the image, connecting lines, filling small cracks within curved lines and noise removal. The block size of the low pass filter used in smoothing step 12 is not necessarily 3x3. A larger mask block can reduce an output distortion due to the screened half-tone area, but degrades the sharpness of the image by overly-suppressing the high frequency component. Accordingly, the size of the mask block is appropriately determined depending on the resolution and output specification of a scanner.

In step 14 for pixel classification, a pixel of interest is classified as a background pixel, an image pixel or a text pixel by using the brightness component and saturation component obtained in step 10 and, optionally, step 12.

In a preferred embodiment of step 14, a pixel of interest is classified as a background pixel, an image pixel or a text pixel, using a predetermined brightness threshold and a predetermined saturation threshold for the brightness and saturation components, respectively, obtained through step 10. Preferably, the pixel of interest is classified as a background pixel, an image pixel, or a text pixel, using a predetermined high brightness threshold Th0 and a predetermined low brightness threshold Th1. An example of the classification is shown in Figure 5. To be more specific, if the brightness component of the pixel of interest is greater than the high brightness threshold Th0 and the saturation component is smaller than a saturation threshold Th1, the pixel of interest is classified as a background pixel. A pixel f of Figure 5 corresponds to a background pixel. If the brightness component of the pixel of interest is greater than the low brightness threshold Th1 or the saturation component of the pixel of interest is greater than the saturation threshold S0 while a pixel of interest is not segmented as a background pixel, the pixel of interest is segmented as an image pixel. In other words, if the brightness component of a pixel of interest is less than Th0 and greater than Th1 or the saturation component of the pixel of interest is greater than S0, the pixel of interest is classified as an image pixel. Pixels a, b, c, and e in Figure 5 are image pixels. If a pixel of interest is classified as neither a background pixel nor an image pixel, the pixel of interest is classified as a text pixel. Pixel d of Figure 5 is a text pixel.

In step 16 for history information storage, which is the pre-processing step of step 18 for area segmentation, the number of successive pixels of similar types, which is used in step 18 to serve as a condition for detecting a background feature and an image feature, is stored as background history information or image history information. In step 16, using background pixel history information or image pixel history information, which are obtained by processing a previous pixel and stored, and the result of pixel classification in step 14, the number of background pixels, image pixels and non-image pixels continuing in the upper or left direction of the pixel of interest is updated and stored.

In an embodiment of step 16 for storing background history information, when the pixel of interest is classified as a background pixel in step 14, the number of background pixels continuing before and in the upper direction of the pixel of interest, including the pixel of interest, is stored as information on the pixel of interest. Preferably, if the number of background pixels continuing in the upper direction of the pixel of interest, including the pixel of interest, is equal to or greater than a predetermined number p, the number p is stored as the image history information of the pixel of interest. To be more specific, the number p can be set to be 10 for a 600 dpi (dot per inch) resolution document image.

In another embodiment of step 16 for storing image history information, when a pixel of interest is classified as a non-background pixel in step 14, the number of non-background pixels continuing in the left direction of the pixel of interest including the pixel of interest is stored as the image history information of the pixel of interest. Preferably, if the number of non-background pixels continuing in the left direction of the pixel of interest including the pixel of interest is equal to or greater than a predetermined number r, the number r is stored as the image history information of the pixel of interest. To be more specific, the number r can be set to be 200, at the 600 dpi resolution.

In step 18 for area segmentation, the pixel of interest is labelled as belonging to a text area, a background area or an image area, using the history information for the pixel of interest stored in step 16.

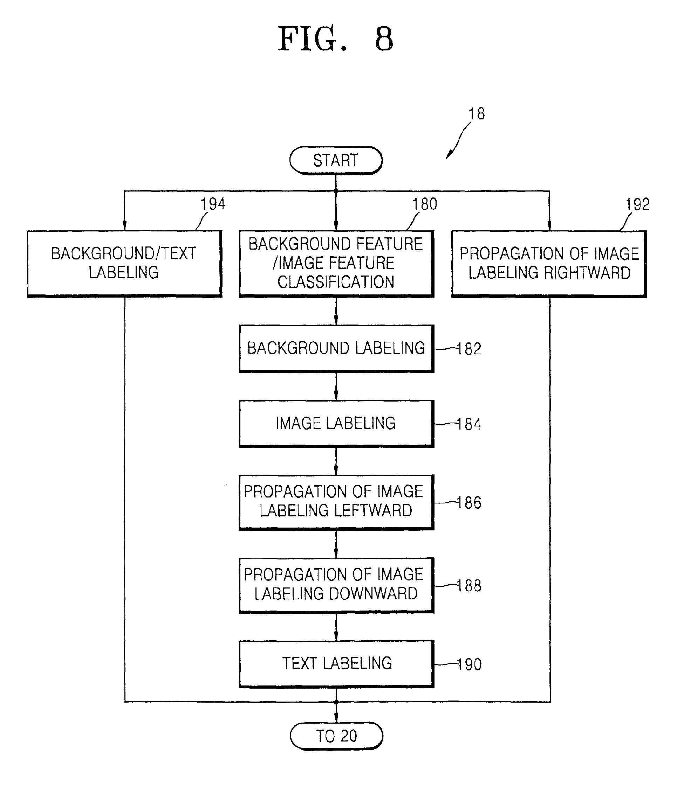

Referring to Figure 8, an embodiment of the area segmentation step 18 of Figure 3 includes step 180 for background feature/image feature classification, step 182 for background labelling and step 184 for image labelling. The embodiment optionally includes steps 186 through 190 for image area propagation, step 192 for text labelling, and step 194 for background/text labelling.

In step 180, using the history information for the pixel of interest, stored in step 16, the pixel of interest is classified as either a background feature pixel connected to consecutive background pixels or an image feature pixel connected to consecutive image pixels. In a preferred embodiment of step 180 for background feature pixel classification, if n pixels, each of the pixels in which the size of background history information is a predetermined number m or greater, exist in succession on the left side of the pixel of interest, the pixel of interest is classified as a background feature pixel. To be more specific, m and n can be set to be 5 for a 600 dpi resolution document image.

In an embodiment of step 180 for image feature pixel classification, if q pixels, each of the pixels in which the size of image history information is a predetermined number p or greater, exist in succession on the left side of the pixel of interest, the pixel of interest is classified as an image feature pixel. To be more specific, p and q can be set to be 10 and 20, respectively, for a 600 dpi resolution document image.

In another embodiment of step 180 for image feature pixel classification, if the size of the image history information on pixels that exist in succession on the left side of the pixel of interest is a predetermined number n or greater, the pixel of interest is classified as an image feature pixel. To be more specific, r can be set to be 200 for a 600 dpi resolution document image.

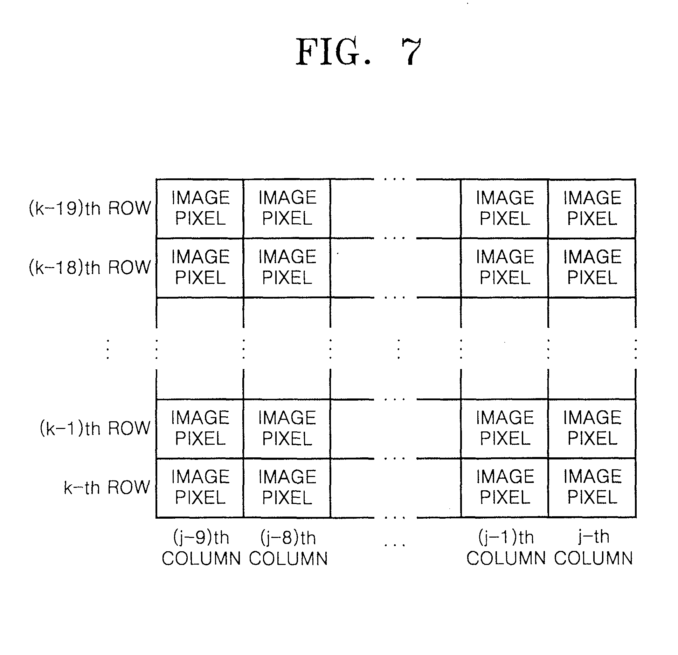

Referring to Figures 6 and 7, in area segmentation step 18, a pixel of interest can classified as a background feature if all pixels within a mxn block are background pixels. For example, m and n can be set to be 5 for a 600 dpi resolution document image. As shown in Figure 6, if 5 background pixels, including the pixel of interest (k,j), which has been classified as a background pixel, continue on the left side of the pixel of interest and the 5 background pixel columns continue in five rows, the pixel of interest (k,j) is determiend to be a background feature. In a preferred embodiment of a method of detecting a background feature from a 5x5 pixel block, it is determined whether five background pixel columns, including the pixel of interest, continue in at least 5 columns. If the pixel of interest (k,j) is determined as a background pixel in step 12, each of the pixels (k-4, j-4) through (k, j-4) on the left side of the pixel of interest (k, j), having background history information, and the pixel columns (k-4, j) through (k, j) are all background pixels, the pixel (k, j) is confirmed as a background feature pixel.

In step 18, a pixel of interest can be determined to be in an image feature if the pixels within a pxq pixel block, for example the pixels within a 10x20 block for 600 dpi resolution, are all image pixels or at least a predetermined number of non-background pixels, for example 200 pixels or more at 600 dpi resolution, continue on the line of interest.

Whether a pixel of interest is determined to be a background feature is determined by not checking data on whether the pixels within the above-defined mxn block have only black and white values or a grey scale values but by considering the number of background pixels continuing in the upper direction of the pixel of interest and whether pixels continue in five or more columns and rows. That is, pixels before a pixel of interest do not need data relating to a grey scale image but need only information on how many background pixels continue. Thus, the memory used in association with a background pixel, in order to store background history information, is $[\log_2 m + 1]$ bits. Here, [ ] denotes a Gauss symbol. If m is 5, one background pixel requires three (= $\log_2 5 + 1$) bits in order to update stored background history information.

An embodiment in which background history information for the pixel of interest (k, j) is stored in step 16 will now be described with reference to Figure 6. As described above, a 3-bit storage space is allocated to each background pixel for stored history information. When a background pixel first appears at pixel (k-4, j-4) in step 14, if pixels (k-4, j-4) through (k, j-4) are all background pixels, the stored history information is updated with binary numbers 001, 010, 011, 100, and 101, which are the information for the pixels (k-4, j-4) through (k, j-4), respectively, and the binary numbers are stored. Likewise, information on the background pixels (k, j-3) through (k, j) is updated with the binary number 101, and the updated information is stored. If a pixel (k+1, j-4) on the line next to the line of interest is a background pixel, the binary number 101 is re-stored. If the pixel (k+1, j-4) is not a background pixel, a binary number 000 is stored.

Similarly, $[\log_2 p + 1]$ bits are required with respect to an image feature pixel. If p is 10, each image pixel requires 4 (= $\log_2 10 + 1$) bits in order to update information. If an image pixel first appears at the pixel (k-9, j-19) and the pixels (k-9, j-19) through (k, j-19) are all image pixels, information for the image pixels are updated with binary numbers 0001 through 1010, respectively, and the new information is stored.

In a conventional image processing method not including step 16 for history information storage, 8 bits are allocated to each of the R, G, and B channels in a pixel in order to segment an area for a colour image with 16777216 colours (i..e 256 levels for each of the R, G and B channels).

Consequently, each pixel requires a 24-bit storage space, i.e. a 3-byte storage space. In order to process a 16777216 colour image, an existing gray-scale or colour image requires 8 bits for black-and-white pixels or 24 bits for RGB colour pixels, respectively. However, an image processing method according to the present invention includes a history information updating step, such that only 7 bits are required to achieve area segmentation. Accordingly, when an application specific integrated circuit (ASIC) implementing the image quality enhancement method according to the present invention is used as an image quality enhancement apparatus, the amount of memory used is significantly reduced, thus lowering the manufacturing cost.

Referring back to Figure 8, in step 182, a pixel of interest classified as a background feature pixel in step 180 is labelled as background so as to belong to a background area.

In step 184, a pixel of interest classified as an image feature pixel in step 180 is labelled as image so as to belong to an image area.

In Figure 8, the preferred embodiment of step 18 further includes steps of propagating an image area, that is step186 comprising propagating an image area in the left direction, step192 of propagating an image area in the right direction, and step 188 of propagating an image area in the lower direction.

In step 186, if the pixel of interest has been classified as an image feature pixel in step 180, successive pixels that contributed to the classifying of the pixel of interest as an image feature pixel and exist on the left side of the pixel of interest are labelled as image areas, and the image areas are propagated to the left-side pixels on the line of interest.

In step 188, if the pixel of interest has been classified as neither a background feature pixel nor an image feature pixel in step 180, the pixel above the pixel of interest and on the line before the pixel of interest is labelled as an image area, and the image area is propagated to a pixel on the lower side of the pixel of interest.

In text labelling step 190, which is an optional feature of step 18, when the pixel of interest has been classified as neither a background feature pixel nor an image feature pixel in step 180, if pixels above the pixel of interest, that is existing on the previous line of the line of interest, have not been labelled as image areas, the pixel of interest is labelled as a text area. In other words, in step 190, if the pixel of interest is neither a background feature pixel nor an image feature pixel and is not propagated from an image area, the pixel of interest is labelled as a text pixel.

In step 192, if the pixel of interest is labelled as an image area in step 184, all of the right-side pixels existing between the pixel on the right side of the pixel of interest and the pixel before the next background feature pixel, are labeled as image area, and the image area is propagated to the right side of the pixel of interest on the line of interest.

In background/text labelling step 194, which is an optional feature of step 18, when an adjacent pixel on the left side of the pixel of interest has been labelled as background area, if the pixel of interest is a background pixel, the pixel of interest is labelled as background area. On the other hand, if the pixel of interest is not a background pixel, the pixel of interest is labelled as text area.

Referring back to Figure 3, in step 20, the quality of an image is improved to different degrees according to whether a pixel of interest has been labelled as a text area, a background area, or an image area in step 16. In a preferred embodiment of step 20, the image quality enhancement step includes text enhancement step 200 and image enhancement step 210.

In text enhancement step 200, the image quality of a pixel of interest labelled as a text area in step 18 is improved differently according to brightness. Preferably, the brightness of a pixel of interest is classified into three brightness classes that are determined based on two predetermined brightness thresholds. Among the three brightness classes, the brightest pixel is white. When a 16777216 colour image is output, R is indicated by 255, G is indicated by 255, and B is indicated by 255. The darkest pixel is black and R, G, and B are all 0. A pixel with an intermediate brightness is sharpened. An unsharpened masking can be adopted to sharpen the intermediately bright pixel. Preferably, the unsharpened masking is performed by increasing an emphasis coefficient to a predetermined value in order to increase an edge emphasis effect.

Unsharpened masking will now be described in more detail. A high-pass filter is obtained by calculating the difference between a pixel of interest (X) and a low-pass value $\bar{X}$ of the pixel of interest as in Equation 5:

$$\text{high pass} = X - \bar{X} \tag{5}$$

$$high\text{-}pass = X - \bar{X} \tag{6}$$

Unsharpened masking denotes a general process for subtracting a blurred image from the original image. A greater emphasis coefficient causes an increased edge emphasis effect. An embodiment of the result of the unsharpened masking process is obtained as in Equation 6:

$$X'=X+k \cdot (X-\bar{X}) \tag{6}$$

$$X'=X+k \cdot (X-\bar{X}) \tag{6}$$

wherein X denotes a central pixel, $\bar{X}$ denotes a mean pixel, k denotes an emphasis coefficient, and X□ denotes the result of the unsharpened masking process. That is, the result of the unsharpened masking process is obtained by adding the high-pass value weighted with a predetermined emphasis coefficient to the original image of the pixel of interest.

Another embodiment of the unsharpened masking is performed as in Equation 7, as presented in "Digital Image Processing" by Gonzalez & Woods:

$$X' = A \cdot X - \bar{X} = (A-1) \cdot X + (X-\bar{X}) \tag{7}$$

$$X'=A \cdot X - \bar{X} = (A-1) \cdot X + (X-\bar{X}) \tag{7}$$

wherein X denotes a centre pixel, $\bar{X}$ denotes a mean pixel, A denotes a magnification factor, and X' denotes the result of the unsharpened masking process.

Such unsharpened masking causes a severe distortion in a screened half-tone area that frequently occurs when a printed image is copied, because a half-tone image is actually shown as a high frequency pattern although the half-tone image is a low frequency portion to the human eye, that is at a resolution range that can be identified by the human eye. As a result, a screened area, which is an image area not needed to be emphasized, is severely emphasized because of the charactristics of sharpening in which a high frequency pattern is greatly emphasized, such that an undesired emphasis effect is created.

In image enhancement step 210, the image quality of a pixel of interest labelled as an image area in step 18 is improved by sharpening the pixel of interest, preferably, using an unsharpened masking process. In unsharpened masking for an image area, it is preferable that an emphasis coefficient is set to be no more than a predetermined value and then processed in order to prevent a screened halftone area from being distorted when the emphasis coefficient is set to be high as described above. Since the distortion of the screened half-tone area is partially reduced by further including smoothing step 12 to smooth the screened half-tone pattern before pixel classification performed in step 14, the value of the emphasis coefficient can be appropriately adjusted according to whether smoothing step 12 is included and the image quality enhancement specification. That is, since the distortion of a screened half-tone area can be reduced when smoothing step 12 is further included, the emphasis coefficient can be determined to be greater.

In final step 22, it is determined whether the pixel of interest is a final pixel whose image quality is to be improved. If it is determined that the pixel of interest is not a final pixel, the method goes back to step 10. Above-described steps 10 through 20 correspond to a process for enhancement the image quality based on one pixel of interest. Accordingly, step 22 is provided to perform image quality enhancement based on a pixel of interest, set the adjacent pixel as a new pixel of interest, and perform image quality enhancement on the new pixel of interest.

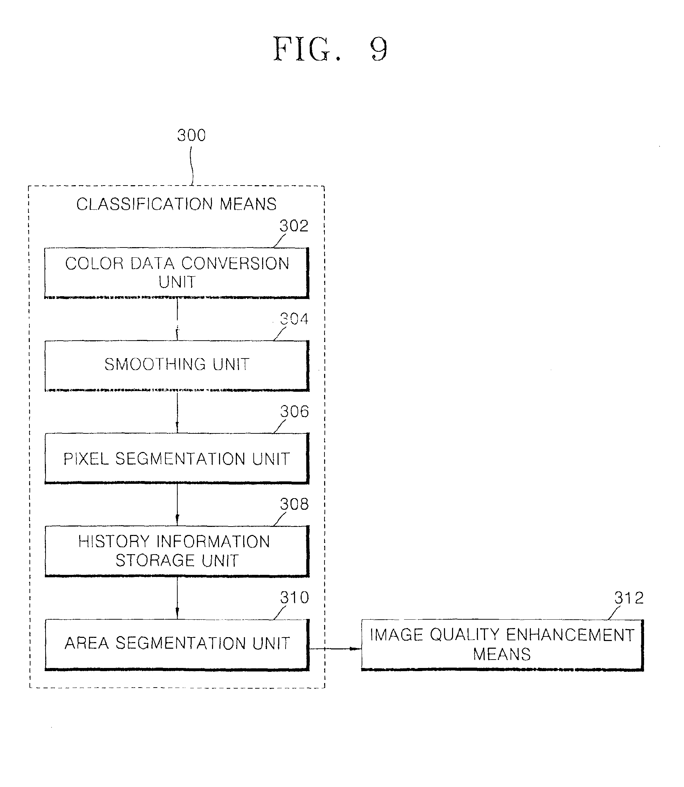

Referring to Figure 9, a digital image quality enhancement apparatus, according to the present invention, includes a classification means 300 and an image quality enhancement means 312. The classification means 300 includes a colour data conversion unit 302, a pixel classification unit 306, a history information storage unit 308, and an area segmentation unit 310.

The classification means 300 classifies a pixel of interest in image data composed of pixels with a predetermined resolution, the image data obtained by scanning a document including a mixture of background, text, and images, into text, background and image areas.

The colour data conversion unit 302 converts the RGB colour data of a pixel of interest into brightness/saturation data having a brightness component and a saturation component.

The pixel classification unit 306 classifies the pixel of interest into a background pixel, an image pixel, or a text pixel using the brightness/saturation data and outputs a pixel classification signal.

The history information storage unit 308 counts the number of successive background pixels before the pixel of interest using the pixel classification signal and stores the counted number of pixels as background history information in an address corresponding to the pixel of interest. Alternatively, the history information storage unit 308 counts the number of successive image pixels before the pixel of interest using the pixel classification signal and stores the counted number of pixels as image history information in the address corresponding to the pixel of interest.

The area segmentation unit 310 receives the background or image history information associated with the pixel of interest from the history information storage unit 308, and classifies the pixel of interest into a text area, a background area, or an image area. If the pixel of interest is classified into a text area, the area segmentation unit 310 labels the pixel of interest as a text area. If the pixel of interest is classified into a background area, the area segmentation unit 310 labels the pixel of interest as a background area. If the pixel of interest is classified into an image area, the area segmentation unit 310 labels the pixel of interest as an image area.

The image quality enhancement means 312 receives a text labelling signal, a background labeling signal, or an image labeling signal from the area segmentation unit 312 and improves the image quality by applying different degrees to classified areas. Preferably, the image quality enhancement means 312 improves the quality of an image by classifying the brightness/saturation data of the text-labeled pixel of interest into at least two classes based on a predetermined brightness threshold. The image quality enhancement means 312 improves the image quality of the image-labeled pixel of interest using an unsharpened mask.

The smoothing unit 304, which is optional in an image quality enhancement apparatus according to the present invention, performs smoothing to decrease the high frequency component of the brightness component of the brightness/saturation data using a low pass filter, and outputs new brightness/saturation data including a smoothed brightness component. Next, the pixel classification unit 306 classifies the pixel of interest into a background pixel, an image pixel, or a text pixel using the new brightness/saturation data output from the smoothing unit 304 and outputs the result of the classification as a pixel classification signal.

As described above, in a digital image quality enhancement method and apparatus according to the present invention, an image including mixed text and image is accurately divided into areas by using history information that represents the tendency that pixels of the same type continue. In particular, the utilization of smoothing and a smoothing unit upon pixel classification reduces an image area segmentation error due to a screened half tone. Propagation of an image area in the left, right, and lower directions prevents emphasis of noise, which can be abruptly generated in an image area, or excessive emphasis of a text included in an image. Since an emphasis method and an emphasis degree are each subdivided according to a classified area, a good quality of output can be obtained. The use of history information reduces the amount of memory used for area segmentation, thus reducing the manufacturing cost.

**Claims**

1. A method of categorising areas of a mixed-content physical document, the method comprising:

   obtaining a colour pixelated electronic representation of the appearance of a physical document; and
   classifying each pixel according its value and the values of neighbouring pixels as being associated with one of a plurality of content types,

   **characterised in that**
   said content types are background, text and image; and
   said classifying of each pixel comprises an initial classification step in which pixels are provisionally classified according to their own values and a subsequent classification step in which the provisional classification is confirmed or modified in dependence on history data as a subsequent classification, the history data comprising a run length of similarly provisionally classified pixels in at least one direction from the current pixel.

2. A method according to claim 1, wherein for each provisional background pixel, the history information comprises the run length of provisional background pixels upwards from the current pixel.

3. A method according to claim 1 or 2, wherein for each provisional image pixel, the history information comprises the run length of provisional image pixels upwards from the current pixel.

4. A method according to claim 1, 2 or 3, wherein for each provisional non-background pixel, the history information comprises the run length of provisional non-background pixels leftwards from the current pixel.

5. A method according to any preceding claim, wherein a change to a provisional classification of the current pixel is propagated to the pixels contributing to an associated run length.

6. A method according to any preceding claim, wherein if the current pixel has been subsequently classified as a text pixel and the pixel directly above the current pixel has been subsequently classified as an image pixel, the classification of the current pixel is changed to image pixel.

7. A method according to any preceding claim, wherein if the current pixel has been subsequently classified as an image pixel, propagating the image classification to the right until a subsequently background classified pixel is encountered.

8. A method according to any preceding claim, wherein if the pixel in the current line preceding the current pixel has been subsequently classified as a background and the current pixel has been subsequently classified as a background pixel else classifying the current pixel as a text pixel.

9. A method according to any preceding claim, including applying different image enhancement techniques to areas determined to contain background, text and image pixels.

10. A method according to any preceding claim, wherein text areas are enhanced by classifying the pixels in a text area of interest into three brightness bands, pixels in the brightest band being set to white, pixels in the darkest band being set to black and pixels in the middle band being subject to a sharpening filter.

11. A method according to any preceding claim, wherein images areas are subjected to a sharpening filter.

12. A method according to any preceding claim, wherein said electronic representation is obtained in RGB format and converted to YCbCr format for pixel classification.

13. An apparatus for categorising areas of a mixed-content physical document, the apparatus comprising:

   means for obtaining a colour pixelated electronic representation of the appearance of a physical document; and
   means (300) for classifying each pixel according its value and the values of neighbouring pixels as being associated with one of a plurality of content types,

   **characterised in that**
   said content types are background, text and image; and
   said means (300) for classifying each pixel is configured for classifying each pixel by an initial classification step in which pixels are provisionally classified according to their own values and a subsequent classification step in which the provisional classification is confirmed or modified in dependence on history data as a subsequent classification, the history data comprising a run length of similarly provisionally classified pixels in at least one direction from the current pixel.

14. A digital image quality enhancement method, in which, as to image data composed of pixels with a predetermined resolution, the image data obtained by scanning a script including mixed background, text, and image, a pixel of interest is classified into one of a text area, a background area, and an image area, the image quality of the pixel of interest is improved to different degrees according to which area the pixel of interest is classified into, and then a pixel adjacent to the pixel of interest is set to be a new pixel of interest and the new pixel of interest undergoes the same image quality enhancement as described above, the method comprising:

   (a) converting the RGB color data of the pixel of interest into color data having a brightness component and a saturation component;
   (b) classifying the pixel of interest into any of a background pixel, an image pixel, and a text pixel by using the brightness component and saturation component obtained in step (a);
   (c) storing the number of successive background pixels or image pixels before the pixel of interest including the pixel of interest, as the history information regarding the pixel of interest;
   (d) labeling the pixel of interest as any of a text area, a background area, and an image area by using the history information regarding the pixel of interest stored in step (c);
   (e) enhancement the image quality of the pixel of interest to different degrees depending on an area designated in step (d); and
   (f) determining whether the pixel of interest is a final pixel whose image quality is to be improved, and proceeding to step (a) if it is determined that the pixel of interest is not a final pixel.

15. The digital image quality enhancement method of claim 14, wherein, in step (a), the scanned RGB color data is converted into YCbCr color data, a Y component is adopted as the brightness component, and the saturation component is obtained from Cb and Cr components.

**16.** The digital image quality enhancement method of claim 15, wherein the saturation component is the sum of the absolute values of the Cb and Cr components.

**17.** The digital image quality enhancement method of claim 15, wherein the saturation component is the root mean square (RMS) of the Cb and Cr components.

**18.** The digital image quality enhancement method of claim 14, wherein, in step (b), the pixel of interest is classified into any of a background pixel, an image pixel, and a text pixel by using a predetermined brightness threshold for the brightness component and a predetermined saturation threshold for the saturation component.

**19.** The digital image quality enhancement method of claim 18, wherein, in step (b), the pixel of interest is classified into any of a background pixel, an image pixel, and a text pixel by using a high brightness threshold and a low brightness threshold as the predetermined brightness threshold.

**20.** The digital image quality enhancement method of claim 19, wherein, in step (b), if the brightness component of the pixel of interest is greater than the high brightness threshold and the saturation component is smaller than the saturation threshold, the pixel of interest is classified into a background pixel.

**21.** The digital image quality enhancement method of claim 20, wherein, when the pixel of interest is not classified into the background pixel in step (b), if the brightness component of the pixel of interest is greater than the high brightness threshold or the saturation component is greater than the saturation threshold, the pixel of interest is classified into an image pixel.

**22.** The digital image quality enhancement method of claim 21, wherein, if the pixel of interest is classified into neither the background pixel nor the image pixel, the pixel of interest is classified into a text pixel.

**23.** The digital image quality enhancement method of claim 14, further comprising (g) performing smoothing to reduce a high frequency component of the brightness component, after step (a).

**24.** The digital image quality enhancement method of claim 14, wherein, in step (c), when the pixel of interest is classified as a background pixel in step (b), the number of background pixels that continue in the upper direction of the pixel of interest, including the pixel of interest, is stored as the background history information of the pixel of interest.

**25.** The digital image quality enhancement method of claim 24, wherein, in step (c), when the pixel of interest is classified as a background pixel in step (b), if the number of background pixels that continue in the upper direction of the pixel of interest, including the pixel of interest, is a predetermined number of m or greater, the number m is stored as the background history information of the pixel of interest.

**26.** The digital image quality enhancement method of claim 14, wherein, in step (c), when the pixel of interest is classified as an image pixel in step (b), the number of image pixels that continue in the upper direction of the pixel of interest, including the pixel of interest, is stored as the image history information of the pixel of interest.

**27.** The digital image quality enhancement method of claim 26, wherein, in step (c), when the pixel of interest is classified as an image pixel in step (b), if the number of image pixels that continue in the upper direction of the pixel of interest, including the pixel of interest, is a predetermined number of p or greater, the number p is stored as the image history information of the pixel of interest.

**28.** The digital image quality enhancement method of claim 14, wherein, in step (c), when the pixel of interest is classified as a non-background pixel in step (b), the number of non-background pixels that continue in the left direction of the pixel of interest, including the pixel of interest, is stored as the image history information of the pixel of interest.

**29.** The digital image quality enhancement method of claim 28, wherein, in step (c), when the pixel of interest is classified as a non-background pixel in step (b), if the number of non-background pixels that continue in the left direction of the pixel of interest, including the pixel of interest, is a predetermined number of r or greater, the number r is stored as the image history information of the pixel of interest.

**30.** The digital image quality enhancement method of claim 14, wherein step (d) comprises:

(d1) classifying the pixel of interest into any of a background feature pixel connected to the successive background pixels and an image feature pixel connected to the successive image pixels by using the history information regarding the pixel of interest stored in step (c);

(d2) background-labeling the pixel of interest classified into a background feature pixel in step (d1) so that the pixel of interest belongs to a background area; and

(d3) image-labeling the pixel of interest classified into an image feature pixel in step (d1) so that the pixel of interest belongs to an image area.

31. The digital image quality enhancement method of claim 30, wherein, if the pixel of interest on the line of interest has been classified into an image feature pixel in step (d1), step (d) further comprises (d4) propagating image labeling leftward the pixel of interest so that consecutive pixels before the pixel of interest, based on which the pixel of interest has been classified into the image feature pixel, belong to an image area.

32. The digital image quality enhancement method of claim 30, wherein, if the pixel of interest has been classified into neither a background feature pixel nor an image feature pixel in step (d1) and the pixel directly above the pixel of interest on the line of interest has been image-labeled, step (d) further comprises (d5) propagating image labeling downward the pixel above the pixel of interest so that the pixel of interest belongs to an image area.

33. The digital image quality enhancement method of claim 32, wherein if the pixel of interest has been classified into neither a background feature pixel nor an image feature pixel in step (d1), and the pixel directly above the pixel of interest has not been image-labeled, step (d) further comprises (d6) text-labeling the pixel of interest so that the pixel of interest belongs to a text area.

34. The digital image quality enhancement method of claim 30, wherein, if the pixel of interest on the pixel of interest has been classified into an image feature pixel in step (d1), step (d) further comprises (d7) propagating image labeling rightward the pixel of interest so that all of the pixels that exist after the pixel of interest and before a background feature pixel belong to an image area.

35. The digital image quality enhancement method of claim 30, wherein, if the pixel before the pixel of interest on the line of interest has been background-labeled, step (d) further comprises (d8) background-labeling the pixel of interest so that the pixel of interest belongs to a background area, if the pixel of interest is a background pixel, and text-labeling the pixel of interest so that the pixel of interest belongs to a text area, if the pixel of interest is not a background pixel.

36. The digital image quality enhancement method of claim 30, wherein in step (d1), if a predetermined number, n, of pixels, each of the pixels in which the size of background history information is a predetermined number m or greater, continue in the left direction of the pixel of interest, the pixel of interest is classified into a background feature pixel.

37. The digital image quality enhancement method of claim 30, wherein in step (d1), if a predetermined number, q, of pixels, each of the pixels in which the size of image history information is a predetermined number p or greater, continue in the left direction of the pixel of interest, the pixel of interest is classified into an image feature pixel.

38. The digital image quality enhancement method of claim 30, wherein in step (d1), if the pixel of interest has image history information whose size is a predetermined number r or greater, that is, if r or more pixels not classified into background pixels exist on the left side of the pixel of interest, the pixel of interest is classified into an image feature pixel.

39. The digital image quality enhancement method of claim 14, wherein step (e) includes enhancement the quality of image in such a way that different image quality enhancements are applied according to the brightness of the pixel of interest designated as a text area in step (d).

40. The digital image quality enhancement method of claim 39, wherein step (e) includes classifying the brightness of the pixel of interest into three brightness groups based on two brightness thresholds, processing a brightest pixel so as to be complete white, processing a darkest pixel so as to be complete black, and sharpening a middle bright pixel.

41. The digital image quality enhancement method of claim 40, wherein unsharpened masking is performed for the sharpening process by determining an emphasis coefficient to be a predetermined value or greater in order to increase an edge emphasis effect.

**42.** The digital image quality enhancement method of claim 14, wherein step (e) includes unsharpened masking performed with respect to the pixel of interest designated as an image area in step (d).

**43.** The digital image quality enhancement method of claim 42, wherein the unsharpened masking is performed by determining the emphasis coefficient to be a predetermined value or less.

**44.** A digital image quality enhancement apparatus including: a classification means for classifying a pixel of interest in image data that is composed of pixels with a predetermined resolution and obtained by scanning a script including mixed background, text, and image into any of a text area, a background area, and an image area; and an image quality enhancement means for enhancement the quality of an image to different degrees according to an area to which the pixel of interest belongs, wherein the classification means comprises:

a color data conversion unit for converting the RGB color data of the pixel of interest into brightness/saturation data having a brightness component and a saturation component;
a pixel segmentation unit for classifying the pixel of interest into any of a background pixel, an image pixel, and a text pixel by using the brightness/saturation data and outputting the result of the classification as a pixel segmentation signal;
a history information storage unit for counting the number of successive background pixels before the pixel of interest using the pixel segmentation signal and storing the counted number of background pixels as background history information in a predetermined address corresponding to the pixel of interest, and alternatively, counting the number of successive image pixels before the pixel of interest and storing the counted number of image pixels as image history information in the address corresponding to the pixel of interest; and
an area segmentation unit for receiving the background or image history information regarding the pixel of interest from the history information storage unit, classifying the pixel of interest into any of a text area, a background area, and an image area by using the received background or image history information, labeling the pixel of interest as a text if the pixel of interest is classified into a text area, labeling the pixel of interest as a background if the pixel of interest is classified into a background area, and labeling the pixel of interest as an image if the pixel of interest is classified into an image area.

**45.** The digital image quality enhancement apparatus of claim 44, wherein the image quality enhancement means improves the quality of an image by receiving a text labeling signal for the pixel of interest, a background labeling signal for the pixel of interest, or an image labeling signal for the pixel of interest from the area segmentation unit and classifying the brightness/saturation data of the text-labeled pixel of interest into at least two classes based on a predetermined brightness threshold.

**46.** The digital image quality enhancement apparatus of claim 44, wherein the image quality enhancement means receives a text labeling signal for the pixel of interest, a background labeling signal for the pixel of interest, or an image labeling signal for the pixel of interest from the area segmentation unit and improves the image quality of an image-labeled pixel of interest using a unsharpened mask.

**47.** The digital image quality enhancement apparatus of claim 44, further comprising a smoothing unit for performing smoothing to reduce the high frequency component of the brightness component of the brightness/saturation data using a low pass filter and outputting new brightness/saturation data including a smoothed brightness component, wherein the pixel segmentation means classifies the pixel of interest into one of a background pixel, an image pixel, and a text pixel using the new brightness/saturation data and outputting the result of the classification as a pixel segmentation signal.

# FIG. 1 (PRIOR ART)

FIG. 2

# FIG. 3

```
            ┌─────────────┐
            │    START    │
            └─────────────┘
                   │
   ┌───────────────────────────────────┐
   │      COLOR DATA CONVERSION         │──── 10
   └───────────────────────────────────┘
                   │
   ┌───────────────────────────────────┐
   │            SMOOTHING               │──── 12
   └───────────────────────────────────┘
                   │
   ┌───────────────────────────────────┐
   │        PIXEL SEGMENTATION          │──── 14
   └───────────────────────────────────┘
                   │
   ┌───────────────────────────────────┐
   │     HISTORY INFORMATION STORAGE    │──── 16
   └───────────────────────────────────┘
                   │
   ┌───────────────────────────────────┐
   │          AREA SEGMENTATION         │──── 18
   └───────────────────────────────────┘
                   │
   ┌───────────────────────────────────┐
   │      IMAGE QUALITY ENHANCEMENT     │──── 20
   └───────────────────────────────────┘
                   │
            ╱─────────────╲                22
           ╱   IS PIXEL OF   ╲  ──────── NO
           ╲ INTEREST FINAL  ╱
            ╲    PIXEL?     ╱
             ╲─────────────╱
                   │ YES
            ┌─────────────┐
            │     END     │
            └─────────────┘
```

# FIG. 4

| 1/9 | 1/9 | 1/9 |
|-----|-----|-----|
| 1/9 | 1/9 | 1/9 |
| 1/9 | 1/9 | 1/9 |

# FIG. 5

SATURATION
$(\ |C_b|+|C_r|\ \text{OR}\ \sqrt{C_b^2+C_r^2}\ )$

| | a | b | c |
|-----|-----|-----|-----|
| S0 | d | e | f |

Th1  Th0  BRIGHTNESS (Y)

# FIG. 6

| | (j−4)th COLUMN | (j−3)th COLUMN | (j−2)th COLUMN | (j−1)th COLUMN | j-th COLUMN |
|---|---|---|---|---|---|
| (k−4)th ROW | BACKGROUND PIXEL | BACKGROUND PIXEL | BACKGROUND PIXEL | BACKGROUND PIXEL | BACKGROUND PIXEL |
| (k−3)th ROW | BACKGROUND PIXEL | BACKGROUND PIXEL | BACKGROUND PIXEL | BACKGROUND PIXEL | BACKGROUND PIXEL |
| (k−2)th ROW | BACKGROUND PIXEL | BACKGROUND PIXEL | BACKGROUND PIXEL | BACKGROUND PIXEL | BACKGROUND PIXEL |
| (k−1)th ROW | BACKGROUND PIXEL | BACKGROUND PIXEL | BACKGROUND PIXEL | BACKGROUND PIXEL | BACKGROUND PIXEL |
| k-th ROW | BACKGROUND PIXEL | BACKGROUND PIXEL | BACKGROUND PIXEL | BACKGROUND PIXEL | BACKGROUND PIXEL |

# FIG. 7

| | (j−9)th COLUMN | (j−8)th COLUMN | | ... | | (j−1)th COLUMN | j−th COLUMN |
|---|---|---|---|---|---|---|---|
| (k−19)th ROW | IMAGE PIXEL | IMAGE PIXEL | | ... | | IMAGE PIXEL | IMAGE PIXEL |
| (k−18)th ROW | IMAGE PIXEL | IMAGE PIXEL | | ... | | IMAGE PIXEL | IMAGE PIXEL |
| ⋮ | ⋮ | ⋮ | ⋮ | ⋮ | ⋮ | ⋮ | ⋮ |
| (k−1)th ROW | IMAGE PIXEL | IMAGE PIXEL | | ... | | IMAGE PIXEL | IMAGE PIXEL |
| k−th ROW | IMAGE PIXEL | IMAGE PIXEL | | ... | | IMAGE PIXEL | IMAGE PIXEL |

# FIG. 8

18

START

194

192

| BACKGROUND/TEXT LABELING | BACKGROUND FEATURE /IMAGE FEATURE CLASSIFICATION | PROPAGATION OF IMAGE LABELING RIGHTWARD |

180

BACKGROUND LABELING — 182

IMAGE LABELING — 184

PROPAGATION OF IMAGE LABELING LEFTWARD — 186

PROPAGATION OF IMAGE LABELING DOWNWARD — 188

TEXT LABELING — 190

TO 20

# FIG. 9

CLASSIFICATION MEANS (300)

- 302 COLOR DATA CONVERSION UNIT
- 304 SMOOTHING UNIT
- 306 PIXEL SEGMENTATION UNIT
- 308 HISTORY INFORMATION STORAGE UNIT
- 310 AREA SEGMENTATION UNIT

312 IMAGE QUALITY ENHANCEMENT MEANS